## Europäisches Patentamt

## European Patent Office

## Office européen des brevets

(11) Veröffentlichungsnummer: **0 069 425**
**A2**

(12) **EUROPÄISCHE PATENTANMELDUNG**

(21) Anmeldenummer: 82200810.8

(22) Anmeldetag: 30.06.82

(51) Int. Cl.³: **E 06 B 9/32**
**E 06 B 9/264**

(30) Priorität: 02.07.81 DE 3126038

(43) Veröffentlichungstag der Anmeldung:
12.01.83 Patentblatt 83/2

(84) Benannte Vertragsstaaten:
DE FR GB IT SE

(71) Anmelder: Philips Patentverwaltung GmbH
Steindamm 94
D-2000 Hamburg 1(DE)

(84) Benannte Vertragsstaaten:
DE

(71) Anmelder: N.V. Philips' Gloeilampenfabrieken
Groenewoudseweg 1
NL-5621 BA Eindhoven(NL)

(84) Benannte Vertragsstaaten:
FR GB IT SE

(72) Erfinder: Söllner, Gerhard, Dr.
Höfchensweg 20
D-5100 Aachen(DE)

(74) Vertreter: Auer, Horst, Dipl.-Ing. et al,
Philips Patentverwaltung GmbH Steindamm 94
D-2000 Hamburg 1(DE)

(54) Vorrichtung zum Drehen einer in einem evakuierten Glasrohr eingeschlossenen Sonnenschutzlamelle.

(57) Bei einer Vorrichtung zum Drehen einer in einem Glasrohr (1) eines wärmeisolierenden Wandelementes eingeschlossenen Sonnenschutzlamelle (5) um ihre Längsachse sitzt diese Lamelle auf einer im Glasrohr gelagerten Welle (4), die am Ende ein vorzugsweise mit Sägezähnen (7) versehenes Schaltrad (6) trägt, das mit Hilfe einer von außen steuerbaren Schaltklinke (15) schrittweise vorwärts bewegbar ist, wobei das Schaltrad am Ende jedes Bewegungsschrittes durch ein mit dem Schaltklinkenantrieb (9) gekoppeltes Arretierglied (21) festgesetzt und erst bei Ausführung eines weiteren Bewegungsschrittes wieder freigegeben wird.

Fig.1

Vorrichtung zum Drehen einer in einem evakuierten Glasrohr eingeschlossenen Sonnenschutzlamelle

Die Erfindung bezieht sich auf eine Vorrichtung zum Drehen
einer in einem evakuierten Glasrohr eines wärmeisolierenden, lichtdurchlässigen Wandelementes eingeschlossenen
Sonnenschutzlamelle um ihre Längsachse durch Ansteuerung
von außen.

Aus der DE-OS 25 22 159 sind wärmeisolierende, lichtdurchlässige Wandelemente für Hauswände oder -dächer bekannt,
die aus einer Anzahl achsparallel nebeneinanderliegender,
auf ihrer Innenseite mit einer wärmereflektierenden
Schicht bedeckter, evakuierter Glasrohre bestehen, welche
beidseitig mit einer Glasscheibe oder transparenten Kunststoffplatte abgedeckt sind. Bei solchen Wandelementen ist
vielfach ein einstellbarer Sonnenschutz erwünscht, der die
von außen eindringende Licht- und Wärmestrahlung entsprechend den gewünschten Anforderungen im dahinterliegenden
Raum dosiert. Ein derartiger Sonnenschutz kann durch in
den evakuierten Glasrohren eingeschlossene, um ihre Längsachse drehbare Sonnenschutzlamellen erreicht werden, wie es
bei dem Wandelement nach der DE-OS 28 36 542 der Fall ist.
Hierbei sind die Lamellen einseitig mit einer infrarotreflektierenden Schicht versehen und können gleichzeitig
als Sonnenkollektoren dienen.

An die drehbaren Sonnenschutzlamellen und ihren Antrieb
werden besondere Anforderungen gestellt. Die Lamellen
müssen in viele definierte Stellungen gebracht werden
können und dort auch verbleiben. Alle Lamellen eines Wandelementes sollen am Ende jedes Bewegungsvorganges die
gleiche Lage einnehmen. Ein eventuelles Außer-Takt-geraten
einzelner Lamellen muß mit einfachen Mitteln korrigiert werden können. Alle Lamellen eines Wandelementes sollen
gemeinsam ansteuerbar und mit möglichst geringem Energieaufwand drehbar sein. Der Mechanismus für die Drehbewegung
der Lamellen muß im Glasrohr und außerhalb dieses Rohres
so klein gehalten werden, daß er z.B. im Glasrohr an einem
Rohrende und außerhalb der Glasrohres im Rahmen des Wandelementes untergebracht werden kann. Außerdem muß der Drehmechanismus und seine Montage einfach und billig sein.

Bei dem Wandelement nach der DE-OS 28 36 542 erfolgt die
Drehung der in den evakuierten Glasrohren eingeschlossenen Lamellen mit Hilfe einer dauermagnetischen Kupplung.
Da zum Drehen derartiger Lamellen zum Teil erhebliche
Kräfte erforderlich sind, erfolgt hierbei die Drehung der
Lamellen nicht immer synchron zur Drehbewegung der außerhalb der Glasrohre sitzenden Antriebsmagnete. Am Ende
einer Drehbewegung werden sich daher nicht alle Lamellen
eines Wandelementes in der gleichen Lage befinden, was
die Funktion des Wandelementes beeinflußt.

Der Erfindung liegt daher die Aufgabe zugrunde, eine Vorrichtung zum Drehen einer in einem evakuierten Glasrohr
eingeschlossenen Sonnenschutzlamelle zu schaffen, bei der
die Lamelle jeweils eine genau vorgegebene Winkeldrehung
ausführt und diese Lage auch dann beibehält, wenn auf das
Glasrohr unbeabsichtigte Einflüsse, z.B. in Form von Erschütterungen o.dgl., einwirken sollten.

Diese Aufgabe wird bei einer Vorrichtung eingangs erwähnter Art gemäß der Erfindung dadurch gelöst, daß die Lamelle auf einer im Glasrohr gelagerten Welle sitzt, die
am Ende ein Schaltrad trägt, das auf seinem Umfang in
winkelgleichen Abständen mit Eingriffselementen versehen
und mit Hilfe einer mit diesen Eingriffselementen zusammenwirkenden, von außen steuerbaren Schaltklinke schrittweise
vorwärts bewegbar ist, wobei das Schaltrad am Ende jedes Bewegungsschrittes durch ein mit dem Schaltklinkenantrieb gekoppeltes Arretierglied festgesetzt und erst bei Ausführung eines weiteren Bewegungsschrittes wieder freigegeben wird.

Das Schaltrad mit seinen Eingriffselementen und die Schaltklinke bilden eine Art Schrittschaltwerk. Bei jedem Bewegungsschritt dreht die mit den Eingriffselementen zusammenwirkende Schaltklinke das Schaltrad um eine Kreisteilung weiter. Anschließend kehrt die Schaltklinke wieder in ihre Ausgangslage zurück, ohne das Schaltrad zurückzudrehen. Vor und nach dem Bewegungsschritt ist das Schaltrad durch ein Arretierglied blockiert. Dieses Arretierglied ist so mit dem Schaltklinkenantrieb gekoppelt, daß es das Schaltrad erst kurz vor einem neuen Bewegungsschritt freigibt und vor Beendigung des Bewegungsschrittes wieder bereit ist, das Schaltrad nach Durchlaufen einer definierten Wegstrecke zu blockieren.

Die Eingriffselemente können z.B. Bolzen, Haken oder Einschnitte bzw. Löcher im Schaltrad sein. Vorzugsweise ist jedoch das Schaltrad auf seinem Umfang mit Sägezähnen versehen. In diesem Fall drückt die Schaltklinke zur Vorwärtsbewegung gegen eine steile Zahnflanke des Schaltrades und gleitet anschließend über die flache Flanke des Vorderzahnes zurück.

Gemäß einer bevorzugten Ausführungsform der Vorrichtung nach der Erfindung weist der Schaltklinkenantrieb einen im Glasrohr angeordneten, gegebenenfalls unter Federkraft stehenden Klappanker eines mit seiner Erregerspule außerhalb des Glasrohres angeordneten Relais auf, der über einen Hebel mit der Schaltklinke gelenkig verbunden ist. Bei Erregung des Relais durch Stromfluß durch die Erregerspule wird der Klappanker in Richtung Erregerspule gezogen, wodurch die mit ihm über einen Hebel verbundene Schaltklinke vorwärts bewegt wird und dabei das Schaltrad um eine Kreisteilung weiterdreht. Bei Abschaltung des Stromes geht der Klappanker in seine Ausgangslage zurück und nimmt dabei die Schaltklinke mit. - Die Erregerspule des Relais kann im Rahmen des Wandelementes untergebracht sein.

Nach einer anderen bevorzugten Ausführungsform der Vorrichtung nach der Erfindung ist die Schaltklinke am freien Ende eines Thermo-Bimetallstreifens angebracht, der im Glasrohr neben dem Schaltrad und sich parallel dazu bewegend angeordnet ist. Bei Erhitzung des Bimetallstreifens verbiegt er sich in Vorwärtsrichtung des Schaltrades und dreht dieses dabei mit Hilfe der Schaltklinke um eine Kreisteilung weiter.

Der Thermo-Bimetallstreifen kann durch eine Heizwicklung, welche außen auf dem Glasrohr angebracht sein kann, erhitzt werden. Vorzugsweise wählt man jedoch eine elektrische Direktheizung, wobei der Bimetallstreifen selbst als Heizwiderstand dient. In diesem Fall sind zweckmäßigerweise an den Bimetallstreifen elektrische Stromzuführungsdrähte angeschlossen, welche vakuumdicht aus dem Glasrohr herausgeführt sind und zum Anschluß an eine Spannungsquelle dienen.

Zwecks Arretierung des Schaltrades ist dieses auf seiner äußeren Stirnseite mit den Eingriffselementen zugeordneten Öffnungen versehen, die auf einem Kreis um die Lamellenlängsachse angeordnet sind und in die schrittweise ein unter Federkraft stehender Arretierstift eindringt, der vom Schaltklinkenantrieb über einen Mitnehmer vor Beginn eines weiteren Bewegungsschrittes aus der Öffnung herausgezogen und noch vor Beendigung des Bewegungsschrittes wieder freigegeben wird. Nach Freigabe des Arretierstiftes wird er mittels einer Feder seitlich gegen das sich drehende Schaltrad gedrückt, welches am Arretierstift entlanggleitet, bis dieser am Ende der Drehbewegung um
eine Kreisteilung in die nächste Öffnung eindringt und
damit das Schaltrad arretiert.

Bei Verwendung eines Relais mit Klappanker ist vorzugsweise der Arretierstift schwenkbar gelagert und greift
mit seinem vom Schaltrad abgewandten und dort umgebogenen
Mitnehmerende in eine Aussparung im Klappanker riegelartig ein. Wird der Klappanker von der Relais-Erregerspule
angezogen, zieht er über den Mitnehmer den Arretierstift
aus dem Schaltrad heraus. Noch vor Beendigung der Klappankerschwenkung und damit der Schaltraddrehung rastet das
Mitnehmerende aus der Klappankeraussparung aus und federt
wieder seitlich gegen das Schaltrad.

Wenn die Vorrichtung mit einem Thermo-Bimetallstreifen
ausgestattet ist, kann auf der anderen Seite dieses Streifens eine am Ende sägezahnförmig abgebogene Blattfeder
angebracht sein, die sich mit ihrer breiten Fläche parallel
zur äußeren Stirnseite des Schaltrades bewegt und dabei den
schwenkbar gelagerten Arretierstift über eine mit ihm fest
verbundene Mitnehmerfahne aus der Schaltradöffnung herauszieht. Danach gleitet die Mitnehmerfahne auf der flachen
Flanke der Blattfeder wieder in ihre Ausgangslage zurück,
so daß auch der Arretierstift wieder auf der äußeren
Stirnseite des Schaltrades zur Anlage kommt, bis er in die
nächste Arretieröffnung des Schaltrades eindringt.

Zweckmäßigerweise sind die Lagerböcke für den Klappanker
und den Arretierstift sowie die Klemmhalterung für den
Bimetallstreifen an einer im Glasrohr angeordneten, sich
quer zur Längsachse der Lamelle erstreckenden Lagerplatte
für die Lamellenwelle befestigt. Die Lagerböcke können als
aus der Lagerplatte herausgedrückte Laschen ausgebildet
sein.

Einige Ausführungsbeispiele der Erfindung werden nunmehr anhand der Zeichnung näher erläutert. Es zeigen:

Fig. 1 einen Längsschnitt durch das Ende eines Sonnenschutzlamellenrohres mit einer Vorrichtung zum Drehen der Lamelle (übersichtshalber sind die Arretiermittel zum Festsetzen der Drehvorrichtung fortgelassen worden),

Fig. 2 einen Querschnitt durch das Sonnenschutzlamellenrohr nach Fig. 1 längs der Linie II-II,

Fig. 3 einen der Fig. 1 entsprechenden Längsschnitt durch das Sonnenschutzlamellenrohr mit den Mitteln zur Arretierung der in Fig. 1 dargestellten Drehvorrichtung (diese ist hier übersichtshalber fortgelassen worden),

Fig. 4 einen Querschnitt durch ein Sonnenschutzlamellenrohr mit einer andersartigen Vorrichtung zum Drehen und Arretieren der Sonnenschutzlamelle,

Fig. 5 einen Schnitt durch das Glasrohr nach Fig. 4 längs der Linie V-V in vergrößertem Maßstab.

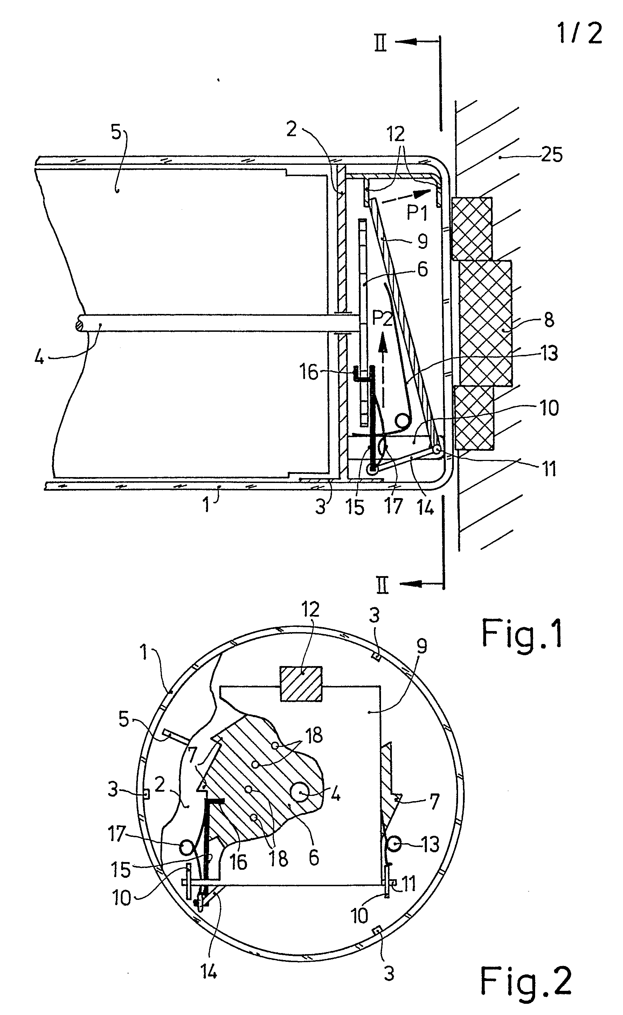

Gemäß Fig. 1 sind in einem evakuierten Glasrohr 1 an den Enden querliegende Lagerplatten 2 untergebracht, die sich mit jeweils drei abgewinkelten Ansätzen 3 an der Innenwand des Glasrohres 1 abstützen (in den Figuren ist jeweils nur eine Lagerplatte 2 dargestellt). Die Lagerplatten 2 dienen zur Aufnahme einer drehbaren Welle 4, auf der eine z.B. aus dünnem Metallblech oder plattenförmigem Kunststoff hergestellte Sonnenschutzlamelle 5 befestigt ist. Auf der Welle 4 sitzt am Ende ein Schaltrad 6, das auf seinem Umfang in winkelgleichen Abständen mit Sägezähnen 7 versehen ist (Fig. 2).

An der Stirnseite des Glasrohres 1 ist ein elektrisches Relais angeordnet, dessen Erregerspule 8 außerhalb des Glasrohres 1 sitzt und dessen mit der Erregerspule 8 zusammenwirkender Klappanker 9 aus Weicheisen im Inneren des Glasrohres 1 schwenkbar untergebracht ist. Hierfür sind aus der Lagerplatte 2 zwei Laschen 10 rechtwinklig herausgedrückt, die als Lagerböcke für die Schwenkachse 11 des Klappankers 9 dienen. Zwei ebenfalls an der Lagerplatte 2 gehalterte Anschläge 12 dienen als Wegbegrenzer für den Klappanker 9. Zwischen dem Klappanker 9 und seinem Lagerbock 10 ist eine Zugfeder 13 vorgesehen, welche den Klappanker 9 von der Erregerspule 8 wegzieht. An der Schwenkachsenseite des Klappankers 9 ist ein Hebel 14 befestigt, mit dessen Ende eine Schaltklinke 15 gelenkig verbunden ist. Diese Schaltklinke 15 liegt mit ihrem gabelförmigen Ende 16 auf dem Rand des Schaltrades 6 auf und wird durch eine Druckfeder 17 gegen das Schaltrad 6 gedrückt.

Bei Stromfluß durch die Erregerspule 8 wird der Klappanker 9 in Richtung des Pfeiles $P_1$ angezogen. Gleichzeitig wird die Schaltklinke 15 über den Hebel 14 in Richtung des Pfeiles $P_2$ vorwärts bewegt, wobei ihr Ende 16 gegen die steile Flanke eines der Sägezähne 7 des Schaltrades 6 drückt und damit das Schaltrad 6 um eine Zahnteilung vorwärts dreht. Bei Entregung des Relais wird der Klappanker 9 durch die Zugfeder 13 entgegen der Pfeilrichtung $P_1$ gezogen, wobei die Schaltklinke 15 über die flache Flanke des Vorderzahnes zurückgleitet, bis sie auf den nächstfolgenden Sägezahn herabfällt und nun vor der steilen Flanke des Vorderzahnes zu liegen kommt. Mit einem derartigen Schrittschaltwerk lassen sich bei jedem Bewegungsschritt Drehungen des Schaltrades 6 und damit der Sonnenschutzlamelle 5 bis zu 45° ausführen. Beim Ausführungsbeispiel werden kleinere Winkeldrehungen vorgenommen.

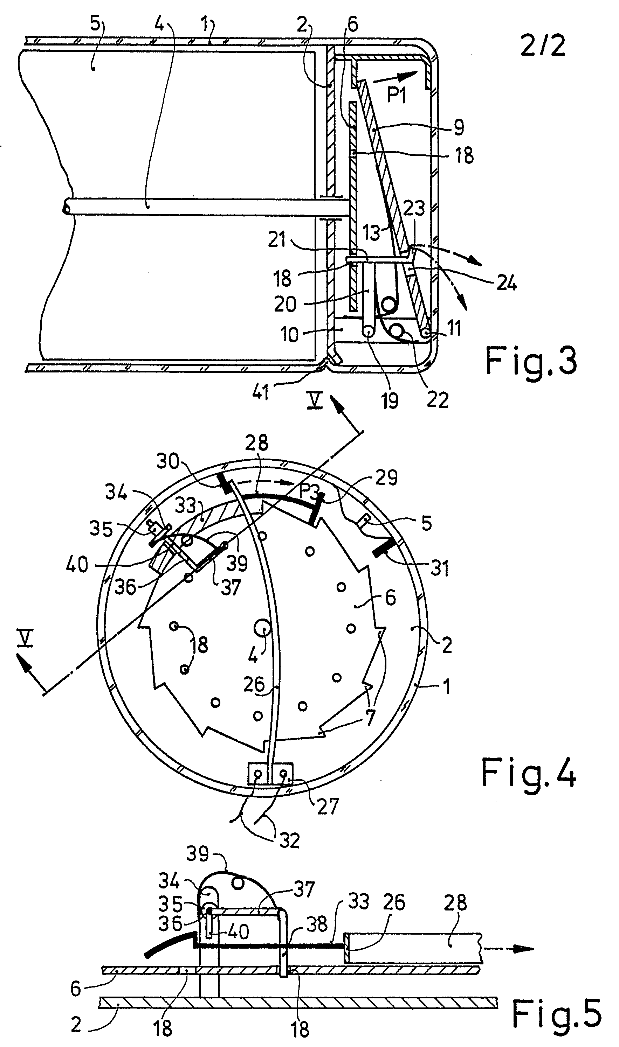

In Fig. 3 sind die Arretiermittel für das Schaltrad 6 dargestellt, die in den Fig. 1 und 2 übersichtshalber fortgelassen wurden. Hierfür ist das Schaltrad 6 auf seiner äußeren Stirnseite mit den einzelnen Sägezähnen 7 zugeordneten Öffnungen 18 versehen, die auf einem Kreis um die Achse der Welle 4 angeordnet sind. An einem der Lagerböcke 10 befindet sich auch ein Gelenk 19 für einen hebelartigen Mitnehmer 20 eines sich im wesentlichen quer zum Schaltrad 6 erstreckenden Arretierstiftes 21, der in seiner Ruhestellung mit Hilfe einer Druckfeder 22 gegen das Schaltrad 6 gedrückt wird und in eines seiner Öffnungen 18 eindringt. Das umgebogene Mitnehmerende 23 greift in eine Aussparung 24 im Klappanker 9 nach Art eines Riegels ein. Die Aussparung 24 kann in den Rand des Klappankers 9 eingefräst sein. Bei Bewegung des Klappankers 9 in Richtung des Pfeiles $P_1$ zieht dieser über das umgebogene Mitnehmerende 23 den Arretierstift 21 aus der betreffenden Öffnung 18 heraus, wodurch das Schaltrad 6 freigegeben wird. Da bei der Schwenkbewegung des Klappankers 9 das in der Zeichnung obere Ende der Aussparung 24 einen anderen Weg beschreibt (gestrichelt angedeutet) als das Mitnehmerende 23 (strichpunktierter Pfeil), gleitet dieses Mitnehmerende 23 auf dem Klappanker 9 in Richtung Schwenkachse 11, bis seine aufliegende Kante in die Aussparung 24 gelangt. Nunmehr ist das Mitnehmerende 23 frei vom Klappanker 9, so daß der Arretierstift 21 von der Druckfeder 22 wieder gegen das Schaltrad 6 geschwenkt wird und auf dessen äußerer Stirnseite zur Anlage kommt. Das Schaltrad 6 gleitet dann solange am anliegenden Arretierstift 21 entlang, bis dieser in die nächste Öffnung 18 eindringt und damit die Drehbewegung blockiert.

Beim Zurückfedern des Klappankers 9 in seine Ausgangslage entgegen der Richtung des Pfeiles $P_1$ muß das umgebogene Mitnehmerende 23 wieder in und hinter die Aussparung 24 im Klappanker 9 eingreifen. Bei der Rückbewegung des Klappankers 9 trifft dieser jedoch zunächst mit seinem nicht-durchlöcherten Teil auf das Mitnehmerende 23. Biegt man den oberen Teil des Mitnehmerendes 23 jedoch so weit zur Seite (aus der Zeichenebene heraus), daß sein äußerer Rand seitlich über die Kante des Klappankers 9 hinausragt, und bildet man das Gelenk 19 so aus, daß es seitlich etwas nachgeben kann, so drückt der zurückfallende Klappanker 9 das Mitnehmerende 23 zur Seite, bis es in die Aussparung 24 des Klappankers 9 gelangt. Danach schnappt das Mitnehmerende 23 wieder so gegen den Klappanker 9 zurück, daß es diesen riegelartig hintergreift. Die Vorrichtung ist dann für den nächsten Bewegungsschritt bereit.

Die beschriebene Vorrichtung kann mit wenigen gestanzten Blechteilen und Federn sehr schmal gebaut werden. Bei einem praktischen Ausführungsbeispiel mit einem Glasrohr 1 von 65 mm Durchmesser betrug die Dicke der Vorrichtung von der Lagerplatte 2 bis zum äußeren Anschlag 12 nur 10 mm. Gegebenenfalls können die verschiedenen Federn durch eine einzige ersetzt werden.

Eine Vielzahl der so beschriebenen Glasrohre 1 mit Sonnenschutzlamellen 5 werden achsparallel nebeneinander und beidseitig mit einer Glasscheibe abgedeckt in einem Rahmen 25 untergebracht und als wärmeisolierendes Wandelement verwendet. Die Erregerspulen 8 der Klappankerrelais werden dann in diesen Rahmen 25 eingesetzt. Die Synchronisation der Drehbewegung der Sonnenschutzlamellen 5 geschieht durch gemeinsames Einschalten der Relais. Bei einer angenommenen Leistung eines Relais von höchstens 50 W kann in einem normalen Haushalt ohne weiteres eine Gruppe von 30 und mehr Glasrohren gleichzeitig geschaltet werden. Um die Abmessungen der Erregerspule 8 zu verkleinern, empfiehlt sich der Betrieb mit Niederspannung von z.B. 20 V.

Bei der Vorrichtung nach den Fig. 4 und 5 entspricht der Aufbau des Glasrohres 1, der Lagerplatte 2, der Welle 4 mit der Sonnenschutzlamelle 5 und des Schaltrades 6 mit den Sägezähnen 7 und den Öffnungen 18 dem der Fig. 1 bis 3. Die Drehbewegung des Schaltrades 6 wird hierbei jedoch durch einen Thermo-Bimetallstreifen 26 bewirkt, der einseitig in eine an der Lagerplatte 2 befestigte Klemmhalterung 27 eingespannt ist, so daß er sich neben dem Schaltrad 6 parallel dazu bewegen kann. Am freien Ende des Bimetallstreifens 26 ist über einen federnden Hebelarm 28 eine Schaltklinke 29 angebracht, welche auf dem Umfang des Schaltrades 6 aufliegt. Der Bimetallstreifen 26 liegt in seiner Ruhelage an einem Anschlag 30 und wird durch Erwärmung in Richtung $P_3$ auf einen Anschlag 31 zu bewegt, an den schließlich die Schaltklinke 29 anstößt. Während dieser Bewegung wird das Schaltrad 6 um eine Zahnteilung weitergedreht. Kühlt der Bimetallstreifen 26 ab, so kehrt er zum Anschlag 30 zurück, wobei die Schaltklinke 29 am federnden Hebelarm 28 über den betreffenden vorderen Sägezahn 7 zurückgleitet und auf den nachfolgenden herabfällt. Die Vorrichtung ist dann wieder für den nächsten Bewegungsschritt bereit. Zur direkten Heizung des Bimetallstreifens 26 sind an diesen elektrische Stromzuführungsdrähte 32 angeschlossen, welche vakuumdicht aus dem Glasrohr 1 herausgeführt sind.

Auf der von der Schaltklinke 29 abgewandten Seite des Bimetallstreifens 26 ist eine am Ende sägezahnförmig abgebogene Blattfeder 33 angebracht, die sich mit ihrer breiten Fläche parallel zur äußeren Stirnseite des Schaltrades 6 bewegt (Fig. 5). In einem ebenfalls aus der Lagerplatte 2 als Lasche herausgedrücktem Lagerbock 34 ist ein Lager 35 befestigt, dessen Längsachse sich parallel zum Schaltrad 6 und in etwa radial zur Welle 4 erstreckt. In dieses Lager 35 ist ein drahtartiger Mitnehmer 36 drehbar aufgenommen, der einmal rechtwinklig umgebogen ist (37) und dann in einen quer zum Schaltrad 6 rechtwinklig abgebogenen Arretierstift 38 übergeht, der in die
Öffnungen 18 des Schaltrades 6 eindringt. Der Mitnehmer 36,
37 wird mit seinem Arretierstift 38 durch eine Zugfeder 39
gegen das Schaltrad 6 gezogen.

Während des Stillstandes des Schaltrades 6 wird dieses
durch den in eine Öffnung 18 eingedrungenen Arretierstift 38 blockiert. Bewegt sich der Bimetallstreifen 26
in Pfeilrichtung $P_3$, so dreht das Z-förmige Ende der
Blattfeder 33 eine am Mitnehmer 36 befestigte Fahne 40
und zieht damit den Arretierstift 38 aus der Öffnung 18
heraus. Bei weiterer Bewegung des Bimetallstreifens 26
in Pfeilrichtung wird die Mitnehmerfahne 40 wieder freigegeben, so daß der Mitnehmer 36, 37 in seine ursprüngliche Lage zurückkehren kann, wobei der Arretierstift 38
auf der äußeren Stirnseite des Schaltrades 6 zur Anlage
kommt. Zunächst gleitet dann das Schaltrad 6 am Arretierstift 38 entlang, bis dieser am Ende des Bewegungsschrittes in die nächste Öffnung 18 eindringt. Nun hat
auch die Mitnehmerfahne 40 wieder ihre Ausgangslage
erreicht. Bei der Zurückbewegung des Bimetallstreifens 26
entgegen der Pfeilrichtung $P_3$ weicht die Blattfeder 33
gegenüber der Mitnehmerfahne 40 nach unten aus und springt
schließlich in die in Fig. 5 dargestellte Lage zurück.

Der Bimetallstreifen 26 kann U-förmig oder doppel-U-förmig
ausgebildet sein. Bei der Doppel-U-Form muß auch am freien
Ende eine elektrisch isolierende Klemmverbindung angebracht werden. Mit einem doppel-U-förmigen Thermo-Bimetallstreifen von 0,5 mm Dicke, 50 mm Länge und 2,5 mm Breite
jedes Schenkels kann ein ausreichender Bewegungsschritt
mit einer elektrischen Leistung von ca. 5 W durchgeführt
werden (1 V, 5 A). Hierbei erwärmt sich der Bimetallstreifen 26 um etwa 100 K; es dauert etwa 30 sec, bis die Schaltklinke 29 den Anschlag 31 erreicht. Die Abkühlzeit beträgt etwa 60 sec.

Die Durchführung der Stromzuführungsdrähte 32 durch das Glasrohr 1 kann ähnlich dem Lampenfuß einer Glühlampe ausgebildet sein. Das Ende des Glasrohres kann dann mit einem Sockel versehen werden, der in eine im Rahmen des Wandelementes eingebettete Fassung paßt.

Um die Lagerplatte 2 im Glasrohr sicher zu haltern, können in das Glasrohr 1 an drei gleichmäßig über seinen Umfang verteilten Stellen Nocken 41 (Fig. 3) eingedrückt sein. Die Lagerplatte 2 erhält dann an ihrem Umfang drei entsprechende Aussparungen. Bei der Montage wird die Lagerplatte 2 so weit in das Glasrohr 1 geschoben, bis sich die Glasnocken 41 in den Aussparungen der Lagerplatte 2 befinden. Anschließend wird die Lagerplätte 2 um ihre Achse gedreht, so daß sie hinter den Glasnocken 41 zu liegen kommt.

Patentansprüche:

1.          Vorrichtung zum Drehen einer in einem eva-kuierten Glasrohr eines wärmeisolierenden, lichtdurch-lässigen Wandelementes eingeschlossenen Sonnenschutz-lamelle um ihre Längsachse durch Ansteuerung von außen, dadurch gekennzeichnet, daß die Lamelle (5) auf einer im Glasrohr (1) gelagerten Welle (4) sitzt, die am Ende ein Schaltrad (6) trägt, das auf seinem Umfang in winkelgleichen Abständen mit Eingriffselementen (7) versehen und mit Hilfe einer mit diesen Eingriffselementen zu-sammenwirkenden, von außen steuerbaren Schalt-klinke (15 bzw. 29) schrittweise vorwärts bewegbar ist, wobei das Schaltrad am Ende jedes Bewegungsschrittes durch ein mit dem Schaltklinkenantrieb (9 bzw. 26) gekoppeltes Arretierglied (21 bzw. 38) festgesetzt und erst bei Ausführung eines weiteren Bewegungsschrittes wieder freigegeben wird.

2.          Vorrichtung nach Anspruch 1, dadurch gekennzeichnet, daß das Schaltrad (6) mit Sägezähnen (7) versehen ist.

3.          Vorrichtung nach Anspruch 1 und 2, dadurch gekennzeichnet, daß der Schaltklinkenantrieb einen im Glasrohr (1) angeordneten, gegebenenfalls unter Federkraft (13) stehenden Klappanker (9) eines mit seiner Erregerspule (8) außerhalb des Glasrohres angeordneten Relais aufweist, der über einen Hebel (14) mit der Schaltklinke (15) gelenkig verbunden ist.

4.      Vorrichtung nach Anspruch 1 und 2, dadurch gekennzeichnet, daß die Schaltklinke (29) am freien Ende eines Thermo-Bimetallstreifens (26) angebracht ist, der im Glasrohr (1) neben dem Schaltrad (6) und sich parallel dazu bewegend angeordnet ist.

5.      Vorrichtung nach Anspruch 4, dadurch gekennzeichnet, daß zur direkten Heizung des Bimetallstreifens (26) an diesen elektrische Stromzuführungsdrähte (32) angeschlossen sind, welche vakuumdicht aus dem Glasrohr (1) herausgeführt sind.

6.      Vorrichtung nach einem der vorherigen Ansprüche, dadurch gekennzeichnet, daß das Schaltrad (6) auf seiner äußeren Stirnseite mit den Eingriffselementen (7) zugeordneten Öffnungen (18) versehen ist, die auf einem Kreis um die Lamellenlängsachse angeordnet sind und in die schrittweise ein unter Federkraft (22 bzw. 39) stehender Arretierstift (21 bzw. 38) eindringt, der vom Schaltklinkenantrieb (9 bzw. 26) über einen Mitnehmer (20 bzw. 36, 37) vor Beginn eines weiteren Bewegungsschrittes aus der Öffnung herausgezogen und noch vor Beendigung des Bewegungsschrittes wieder freigegeben wird.

7.      Vorrichtung nach den Ansprüchen 3 und 6, dadurch gekennzeichnet, daß der Arretierstift (21) schwenkbar gelagert ist und mit seinem vom Schaltrad (6) abgewandten und dort umgebogenen Mitnehmerende (23) in eine Aussparung (24) im Klappanker (9) riegelartig eingreift.

8.      Vorrichtung nach den Ansprüchen 4 und 6, dadurch gekennzeichnet, daß auf der anderen Seite des Bimetallstreifens (26) eine am Ende sägezahnförmig abgebogene Blattfeder (33) angebracht ist, die sich mit ihrer breiten Fläche parallel zur äußeren Stirnseite des Schaltrades (6) bewegt und dabei den schwenkbar gelagerten Arretierstift (38) über eine mit ihm fest verbundene Mitnehmerfahne (40) aus der Schaltradöffnung (18) herauszieht.

9.       Vorrichtung nach einem der bisherigen Ansprüche, dadurch gekennzeichnet, daß die Lagerböcke (10; 34) für den Klappanker (9) und den Arretierstift (21 bzw. 38) sowie die Klemmhalterung (27) für den Bimetallstreifen (26) an einer im Glasrohr (1) angeordneten, sich quer zur Längsachse der Lamelle (5) erstreckenden Lagerplatte (2) für die Lamellenwelle (4) befestigt sind.

0069425

1/2

Fig.1

Fig.2

1-II-PHD 81-074

Fig.3

Fig.4

Fig.5